# EUROPEAN PATENT APPLICATION

(11) **EP 4 794 182 A1**
(43) Date of publication of application: **19.08.2026**
(21) Application number: 24902510.7
(22) Date of filing: 20.11.2024
(51) Int. Cl.: H02M 1/00

(54) **CURRENT-SHARING CIRCUIT FOR SWITCH DEVICES, AND POWER CONVERSION CIRCUIT**

(30) Priority: 14.12.2023 CN 202323413823 U
(71) Applicant: Huawei Digital Power Technologies Co., Ltd., Shenzhen, Guangdong 518043 (CN)
(72) Inventor: QU, Wenqing, Shenzhen, Guangdong 518043 (CN); TANG, Jinwei, Shenzhen, Guangdong 518043 (CN); GE, Rui, Shenzhen, Guangdong 518043 (CN); CHEN, Baoguo, Shenzhen, Guangdong 518043 (CN)
(74) Representative: Isarpatent
(86) International application number: PCT/CN2024/133245
(87) International publication number: WO 2025/124088

(57) **Abstract**

This application provides a switch device current equalization circuit and a power conversion circuit, where a collector of each switch device is connected to a collector interface, and an emitter of each switch device is connected to an emitter interface. A first end of a first resistor is connected to a gate interface, and a second end of the first resistor is connected to a gate of a first switch device. A first end of a second resistor is connected to the second end of the first resistor and the emitter interface, and a second end of the second resistor is connected to a Kelvin emitter interface. A first end of a third resistor is connected to the gate interface, and a second end of the third resistor is connected to a gate of a second switch device. A first end of a fourth resistor is connected to the second end of the third resistor and the emitter interface, and a second end of the fourth resistor is connected to the Kelvin emitter interface. The resistor connected to the gate is used as a drive resistor, and is configured to receive a drive signal, and a resistor connected to a Kelvin emitter is configured to suppress emitter circulation and implement current equalization. In this way, resistance of the two resistors may be independently designed for the drive signal and a power signal, thereby better implementing current equalization of the switch devices.

## Description

### CROSS-REFERENCE TO RELATED APPLICATIONS

This application claims priority to Chinese Patent Application No. 202323413823.0, filed with the National Intellectual Property Administration of the People's Republic of China on December 14, 2023 and entitled "SWITCH DEVICE CURRENT EQUALIZATION CIRCUIT AND POWER CONVERSION CIRCUIT", which is incorporated herein by reference in its entirety.

### TECHNICAL FIELD

This application relates to the field of switch devices, and in particular, to a switch device current equalization circuit and a power conversion circuit.

### BACKGROUND

With an increasing demand for high-power converters on the market, currently parallel connection of switch devices has become a trend. This is mainly because switch devices connected in parallel have advantages such as higher currents, flexible layouts, and high cost performance. Equivalent circuits with different rated currents may be obtained by combining the switch devices connected in parallel. In addition, manners of the parallel connection are very flexible and diversified. Therefore, the parallel connection of the switch devices is one of best solutions during high-power design application. However, when the switch devices are connected in parallel, a phenomenon of static current non-equalization or dynamic current non-equalization occurs, affecting reliability and a service life of the switch devices. Therefore, a current equalization circuit needs to be designed, to ensure that static current equalization and dynamic current equalization are implemented when the switch devices are connected in parallel.

### SUMMARY

According to a first aspect, this application provides a switch device current equalization circuit. The circuit includes a collector interface, a gate interface, an emitter interface, a Kelvin emitter interface, a first switch device, a second switch device, a first resistor, a second resistor, a third resistor, and a fourth resistor. Both the first switch device and the second switch device include a gate, a collector, and an emitter. The collectors of both the first switch device and the second switch device are connected to the collector interface, and the emitters of both the first switch device and the second switch device are connected to the emitter interface. A first end of the first resistor is connected to the gate interface, and a second end of the first resistor is connected to the gate of the first switch device. A first end of the second resistor is connected to the second end of the first resistor and the emitter interface, and a second end of the second resistor is connected to the Kelvin emitter interface. A first end of the third resistor is connected to the gate interface, and a second end of the third resistor is connected to the gate of the second switch device. A first end of the fourth resistor is connected to the second end of the third resistor and the emitter interface, and a second end of the fourth resistor is connected to the Kelvin emitter interface.

In this application, the first resistor is used as a drive resistor corresponding to the first switch device, to limit a drive current of the first switch device. The third resistor is used as a drive resistor corresponding to the second switch device, to limit a drive current of the second switch device, thereby avoiding a case in which a current of a transient drive signal is excessively large and causes an insufficient drive capability or damage. The second resistor is configured to suppress emitter circulation of the first switch device, and the fourth resistor is configured to suppress emitter circulation of the second switch device. In this way, resistance of each resistor can be independently designed for the drive signal and a power signal, thereby better implementing current equalization of the switch devices.

In a possible implementation, the circuit further includes: a fifth resistor, a sixth resistor, a first capacitor, and a second capacitor. The fifth resistor and the first capacitor are connected in series, and the sixth resistor and the second capacitor are connected in series. The first end of the second resistor is connected to the second end of the first resistor through the fifth resistor and the first capacitor that are connected in series. The first end of the fourth resistor is connected to the second end of the third resistor through the sixth resistor and the second capacitor that are connected in series.

Using the foregoing structure may ensure that a voltage between the gate and a Kelvin emitter is stable and avoid impact of high-frequency interference on the circuit, thereby improving reliability and performance of the circuit.

In a possible implementation, the circuit further includes a plurality of wires, the plurality of wires include a first wire and a second wire, the collector of the first switch device is connected to the collector interface through the first wire, the collector of the second switch device is connected to the collector interface through the second wire, and a length difference between the first wire and the second wire is less than a first specified threshold.

In this structure, according to this embodiment of this application, an original emitter resistor is decoupled into two resistors, and the two resistors are separately coupled to the Kelvin emitters and the collectors, thereby preventing the drive signal and the power signal from sharing a same resistor. Equivalent direct-current impedance of the first wire and that of the second wire can implement static current equalization for the two switch devices, and equivalent alternating-current impedance of the first wire and that of the second wire can implement dynamic current equalization for the two switch devices.

In a possible implementation, the equivalent direct-current impedance of the first wire and that of the second wire are at an mΩ level, and the second resistor is at an Ω level.

In a possible implementation, lengths of the first wire and the second wire are greater than 0.5 mm.

In a possible implementation, a length of the first wire and a length of the second wire satisfy the following formula: $\frac{0.8 ∗ \left(L1+L2\right)}{2} < L 1 or L 2 < \frac{1.2 ∗ \left(L1+L2\right)}{2}$ where L1 is the length of the first wire, and L2 is the length of the second wire.

In a possible implementation, the circuit further includes a plurality of wires, the plurality of wires include a third wire and a fourth wire, the emitter of the first switch device is connected to the emitter interface through the third wire, the collector of the second switch device is connected to the emitter interface through the fourth wire, and a length difference between the third wire and the fourth wire is less than a second specified threshold.

In this structure, according to this embodiment of this application, an original emitter resistor is decoupled into two resistors, and the two resistors are separately coupled to the Kelvin emitters and the emitters, thereby preventing the drive signal and the power signal from sharing a same resistor. Equivalent direct-current impedance of the first wire and that of the second wire can implement static current equalization for the two switch devices, and equivalent alternating-current impedance of the first wire and that of the second wire can implement dynamic current equalization for the two switch devices.

In a possible implementation, the equivalent direct-current impedance of the third wire and that of the fourth wire are at an mΩ level, and the fourth resistor is at an Ω level.

In a possible implementation, lengths of the third wire and the fourth wire are greater than 0.5 mm.

In a possible implementation, a length of the third wire and a length of the fourth wire satisfy the following formula: $\frac{0.8 ∗ \left(L3+L4\right)}{2} < L 3 or L 4 < \frac{1.2 ∗ \left(L3+L4\right)}{2}$ where L3 is the length of the third wire, and L4 is the length of the fourth wire.

In a possible implementation, the first switch device and the second switch device are insulated gate bipolar transistors IGBTs or metal-oxide semiconductor field-effect transistors MOSs.

According to a second aspect, this application provides a power conversion circuit. The circuit includes a controller and the switch device current equalization circuit according to the first aspect. The controller is configured to control a first switch device or a second switch device to be turned on, or control the first switch device or the second switch device to be turned off.

### BRIEF DESCRIPTION OF DRAWINGS

FIG. 1 is a schematic of a structure of a current equalization circuit;
FIG. 2 is a schematic 1 of a structure of a switch device current equalization circuit according to this application;
FIG. 3 is a schematic 2 of a structure of a switch device current equalization circuit according to this application;
FIG. 4 is a schematic 3 of a structure of a switch device current equalization circuit according to this application;
FIG. 5 is a diagram of collector connection;
FIG. 6A is a diagram of parallel connection of collectors of two switch devices;
FIG. 6B is a diagram 1 of parallel connection of three switch devices;
FIG. 6C is a diagram 2 of parallel connection of three switch devices;
FIG. 6D is a diagram 3 of parallel connection of three switch devices; and
FIG. 7 is a diagram of emitter connection.

### DESCRIPTION OF EMBODIMENTS

To make the objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to a person skilled in the art. Identical reference numerals in the accompanying drawings denote identical or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

It should be noted that, in descriptions of this application, "at least one" means one or more, and "a plurality of" means two or more. In view of this, in embodiments of this application, "a plurality of" may alternatively be understood as "at least two". The term "and/or" describes an association relationship between associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, and should not be understood as indicating or implying a sequence.

The following first describes some terms in embodiments of this application to help a person skilled in the art have a better understanding.
(1) Static current equalization: When switch devices are in a turned-on state, that is, under a steady-state operating condition in which no switching action is performed on the switch devices, if a current can be evenly distributed among the plurality of devices connected in parallel, the current is statically equalized. A cause of static current non-equalization includes but is not limited to: a structure difference between the switch devices, aging of the switch devices, a parameter difference between the switch devices, and the like.
(2) Dynamic current equalization: When switch devices are in a transitional process, that is, under an operating condition in which the switch devices change from on to off, or the switch devices change from off to on, if a current can be evenly distributed among the plurality of devices connected in parallel, the current is dynamically equalized. A cause of dynamic current non-equalization includes but is not limited to: different switching speeds of the switch devices, different response time of the switch devices, different drive circuits corresponding to the switch devices, and the like.
(3) Kelvin emitter (Kelvin emitter): In a switch device, to enhance switching performance, reduce conduction loss, and improve reliability, a Kelvin emitter is introduced. The Kelvin emitter is a low inductive path of a gate drive signal, and is separated from a main-power current path. For a switch device to which the Kelvin emitter is added, a switching delay may be reduced and a switching frequency may be improved.
(4) Emitter circulation: Due to asymmetry or non-synchronization of one or more factors, a potential difference is generated when a switch device is being turned on or off. However, emitters of switch devices are connected through emitter resistors. Therefore, emitter circulation is generated between the emitter resistors.
(5) Insulated gate bipolar transistor (insulated gate bipolar transistor, IGBT): It is a composite fully controlled voltage-driven power semiconductor device including a bipolar transistor (BJT) and an insulated gate field effect transistor (MOS). It has the merits of high input impedance of the MOSFET and a low conduction voltage drop of a GTR. The GTR has a low saturation voltage drop and high current-carrying density, but has a relatively large drive current. The MOSFET has quite low drive power and a high switching speed, but has a high conduction voltage drop and low current-carrying density. The IGBT integrates the merits of the two devices, and has low drive power and a lower saturation voltage drop. The IGBT has found an increasingly wider scope of application in modern electric power and electronic technologies, and occupies a dominant position in high-power and medium-power application involving a relatively high frequency.
(6) Printed circuit board (printed circuit board, PCB): It is a carrier for electrical connection of electronic components. It is referred to as the "printed" circuit board because it is manufactured through an electronic printing technology.
(7) Oscillation: When a switch device is being turned on or off, oscillation may occur due to inductive effects of the switch device and a wire connected to the switch device. Oscillation may damage the device and also affect stability and performance of a circuit.
(8) Drive voltage negative feedback: When a switch device is being turned on, a current passes through an emitter resistor to generate a voltage drop. In this case, a voltage between two ends of the resistor causes a negative feedback effect on a voltage between a gate and an emitter. Due to the existence of the voltage drop, a drive voltage between the gate and the emitter is actually reduced. When the current increases, the feedback causes a gate voltage to decrease, thereby controlling a further increase of the current.

During application of high-power electric power and electronic converters, parallel connection of switch devices becomes a common choice because an electric current capacity of a single switch device is limited. However, due to problems such as a parameter difference between the switch devices, a parasitic parameter difference between lines, and drive inconsistency between the switch devices, static current non-equalization and dynamic current non-equalization may occur between the switch devices connected in parallel, thereby affecting reliability and a service life of a module. Therefore, during design of a parallel circuit of switch devices, static current equalization and dynamic current equalization of the switch devices need to be considered.

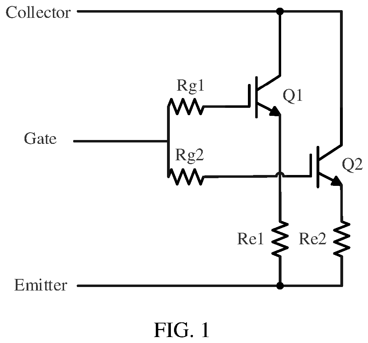

In a possible implementation, as shown in FIG. 1, which is a structure of a current equalization circuit, the current equalization circuit includes two switch devices connected in parallel. Gates of the two switch devices are separately connected in series to a first gate resistor Rg1 and a second gate resistor Rg2. Emitters of the two switch devices are separately connected in series to a first auxiliary resistor Re1 and a second auxiliary resistor Re2, to form a negative feedback circuit. The first auxiliary resistor Re1 and the second auxiliary resistor Re2 can reduce a dynamic current imbalance caused by asymmetry of loop stray inductance, thereby achieving an objective of current equalization.

The first auxiliary resistor Re1 is used as both a drive resistor of the first switch device Q1 configured to conduct a drive signal and an emitter resistor of the first switch device Q1 configured to conduct an emission signal. The second auxiliary resistor Re1 is used as both a drive resistor of the second switch device Q2 configured to conduct a drive signal and an emitter resistor of the second switch device Q2 configured to conduct an emission signal. Therefore, because the drive signal is applied to the gate and the emitter, and a power signal is applied to a collector and the emitter, the auxiliary resistor (the first auxiliary resistor Re1 and the second auxiliary resistor Re2) connected in series to the emitter of each switch device is shared by the drive signal and the power signal. This leads to a difficulty in determining values of resistance of the drive resistor and the emitter resistor. If a value of resistance of the auxiliary resistor is relatively small, an objective of dynamic current equalization cannot be achieved. If the value of the resistance of the auxiliary resistor is relatively large, a heat emitting temperature of the auxiliary resistor is relatively high, and a loss caused is also relatively great. Therefore, it is difficult to find an auxiliary resistor that satisfies the foregoing requirement.

In view of this, this application provides a switch device current equalization circuit. A resistor connected to a gate is used as a drive resistor to receive a drive signal, and a resistor connected to a Kelvin emitter is used to suppress emitter circulation and implement current equalization. In this way, resistance of each resistor may be independently designed for the drive signal and the power signal, thereby better implementing current equalization of the switch devices.

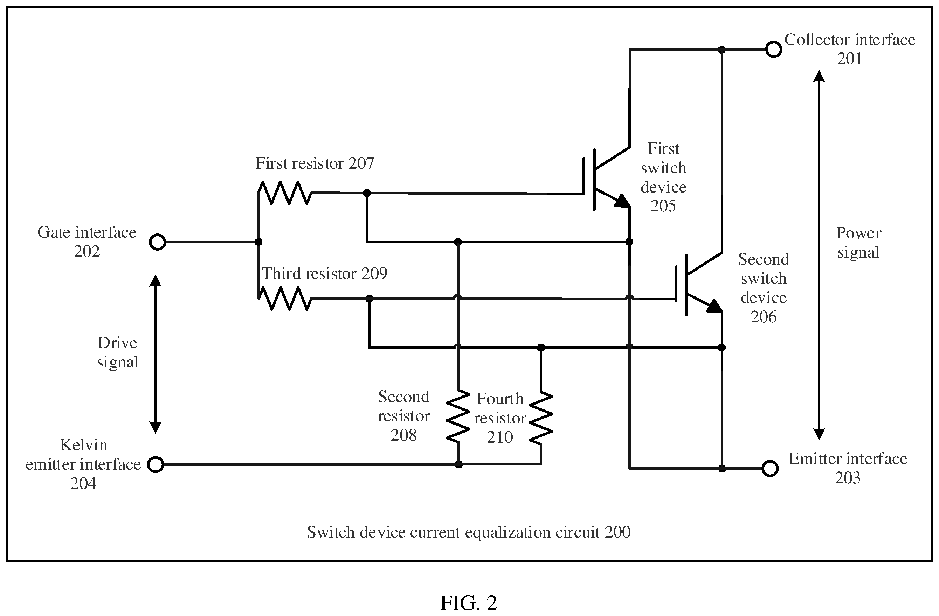

Refer to FIG. 2. A switch device current equalization circuit 200 includes a collector interface 201, a gate interface 202, an emitter interface 203, a Kelvin emitter interface 204, a first switch device 205, a second switch device 206, a first resistor 207, a second resistor 208, a third resistor 209, and a fourth resistor 210.

Both the first switch device 205 and the second switch device 206 include a gate, a collector, and an emitter. The collectors of both the first switch device 205 and the second switch device 206 are connected to the collector interface 201, and the emitters of both the first switch device 205 and the second switch device 206 are connected to the emitter interface 203.

The first switch device 205 and the second switch device 206 may be insulated gate bipolar transistors (insulated gate bipolar transistors, IGBTs), or metal-oxide semiconductor field effect transistors (metal oxide semiconductor field effect transistors, MOSFETs), or the like. Specific internal structures of the first switch device 205 and the second switch device 206 are not limited in this application.

Refer to FIG. 2 again. A first end of the first resistor 207 is connected to the gate interface 202, and a second end of the first resistor 207 is connected to the gate of the first switch device 205. A first end of the second resistor 208 is connected to the second end of the first resistor 207 and the emitter interface 203, and a second end of the second resistor 208 is connected to the Kelvin emitter interface 204. A first end of the third resistor 209 is connected to the gate interface 202, and a second end of the third resistor 209 is connected to the gate of the second switch device 206. A first end of the fourth resistor 210 is connected to the second end of the third resistor 209 and the emitter interface 203, and a second end of the fourth resistor 210 is connected to the Kelvin emitter interface 204.

In this structure, a drive signal is input through the gate interface 202 and the Kelvin emitter interface 204. Therefore, the first resistor 207 is used as a drive resistor corresponding to the first switch device 205, and the first resistor 207 can limit a drive current of the first switch device 205. The third resistor 209 is used as a drive resistor corresponding to the second switch device 206, and the third resistor 209 can limit a drive current of the second switch device 206, thereby avoiding a case in which a current of a transient drive signal is excessively large and causes an insufficient drive capability or damage. In addition, damping effects provided by the first resistor 207 and the third resistor 209 eliminate oscillation signals generated by the first switch device 205 and the second switch device 206.

The second resistor 208 is configured to suppress emitter circulation of the first switch device 205, and is connected in series between a Kelvin emitter of the first switch device 205 and the Kelvin emitter interface 204. The fourth resistor 210 is configured to suppress emitter circulation of the second switch device 206, and is connected in series between a Kelvin emitter of the second switch device 206 and the Kelvin emitter interface 204. When the first switch device 205 and the second switch device 206 reach a switching transient state, a negative feedback of a drive voltage is implemented, thereby suppressing emitter circulation and oscillation. In addition, the second resistor 208 and the fourth resistor 210 that are connected in series to the emitters can further cancel, to some extent, a problem of dynamic current non-equalization caused by asynchronous switching of the first switch device 205 and the second switch device 206 due to inconsistent threshold voltages and asynchronous drive signals.

If threshold voltages of the first switch device 205 and the second switch device 206 are inconsistent, a switch device whose gate voltage is lower in the foregoing two switch devices first arrives at a time of a Miller platform, and a drive current of the switch device that is turned on later is cut off. The Miller platform is an extremely short platform that appears in a process of turning on and turning off a switch device. When this case occurs, a time of turning on the switch device is unbalanced, and therefore, dynamic current non-equalization occurs in the entire parallel circuit.

In addition, non-synchronization of the drive signals also causes unbalanced distribution of transient currents of the first switch device 205 and the second switch device 206 when they are being turned on or off. The drive signal needs to be transmitted by a series of electronic components and conducting wires before reaching the gate of the switch device. In this process, there is a time difference between the drive signals, and therefore the switch devices connected in parallel are turned on or off at different time points, and a switch device that is first turned on or off bears a relatively large over-current.

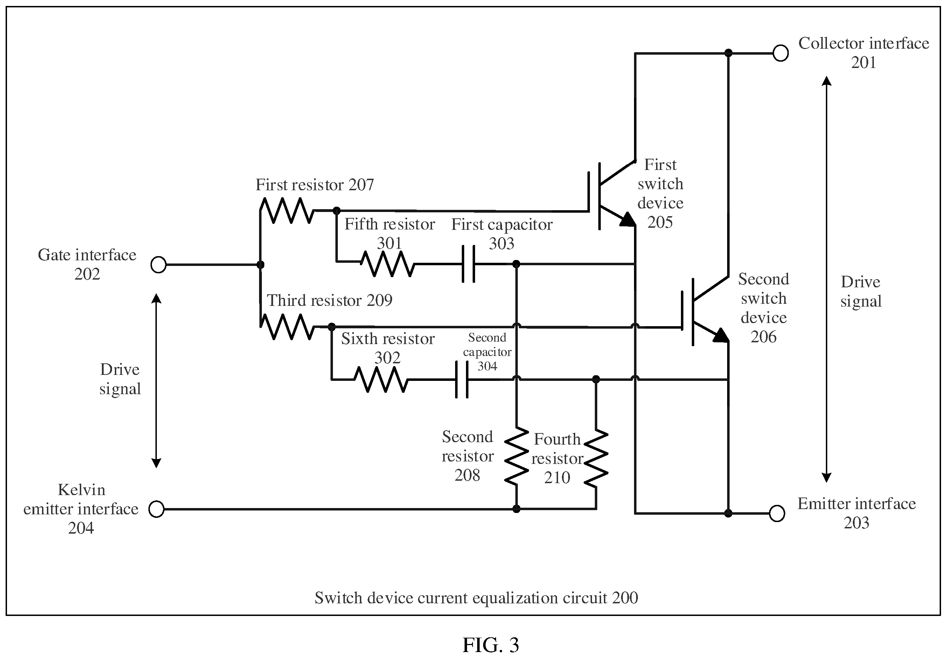

In a possible implementation, as shown in FIG. 3, the switch device current equalization circuit 200 further includes: a fifth resistor 301, a sixth resistor 302, a first capacitor 303, and a second capacitor 304. The fifth resistor 301 and the first capacitor 303 are connected in series, and the sixth resistor 302 and the second capacitor 304 are connected in series. The first end of the second resistor 208 is connected to the second end of the first resistor 207 through the fifth resistor 301 and the first capacitor 303 that are connected in series. The first end of the fourth resistor 210 is connected to the second end of the third resistor 209 through the sixth resistor 302 and the second capacitor 304 that are connected in series. The fifth resistor 301, the first capacitor 303, the sixth resistor 302, and the second capacitor 304 form a resistor-capacitor (RC) buffer circuit. The resistor-capacitor buffer circuit is configured to provide a stable bias voltage and filter out high-frequency interference. This circuit forms a low-pass filter, which allows high-frequency signals to be attenuated and low-frequency signals to pass through by selecting appropriate resistance and capacitance data. This can ensure that a voltage between the gate and the Kelvin emitter is stable, and impact of high-frequency interference on the circuit is avoided, thereby improving reliability and performance of the circuit.

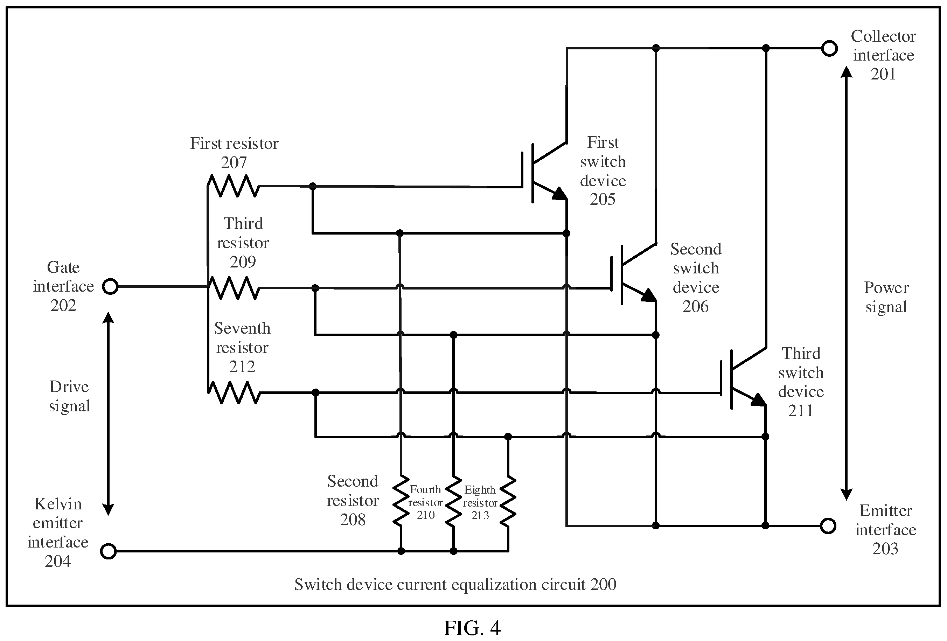

It should be noted that the switch device current equalization circuit provided in this application can implement current equalization not only when two switch devices are connected in parallel, but also when a plurality of switch devices are connected in parallel. For example, three switch devices are connected in parallel. Refer to FIG. 4. The switch device current equalization circuit 200 may further include a third switch device 211, a seventh resistor 212, and an eighth resistor 213. A collector of the third switch device 211 is also connected to the collector interface 201, and an emitter of the third switch device 211 is also connected to the emitter interface 203.

A first end of the seventh resistor 212 is connected to the gate interface 202, and a second end of the seventh resistor 212 is connected to a gate of the third switch device 211. A first end of the eighth resistor 213 is connected to the second end of the seventh resistor 212 and the emitter interface 203, and a second end of the eighth resistor 213 is connected to the Kelvin emitter interface 204.

The seventh resistor 212 is used as a drive resistor corresponding to the third switch device 211, and the seventh resistor 212 can limit a drive current of the third switch device 211. The eighth resistor 213 is used as a power resistor corresponding to the third switch device 211, and is connected in series to the emitter. The eighth resistor 213 implements a negative feedback of a drive voltage when the third switch device 211 reaches a switching transient state, to suppress emitter oscillation.

It is understood that current equalization performance of the plurality of switch devices connected in parallel is mainly affected by, including but not limited to, the following factors:
1. Difference between on-state threshold voltages of the switch devices. A higher on-state threshold voltage represents a later turn-on moment of the switch device. 2. Collector-emitter saturation voltages and diode forward voltages of the switch devices. This factor is determined by manufacturing processes and inherent parameters of the switch devices. 3. Node temperatures of the switch devices are different. 4. Magnetic fields in which the switch devices are located are different.

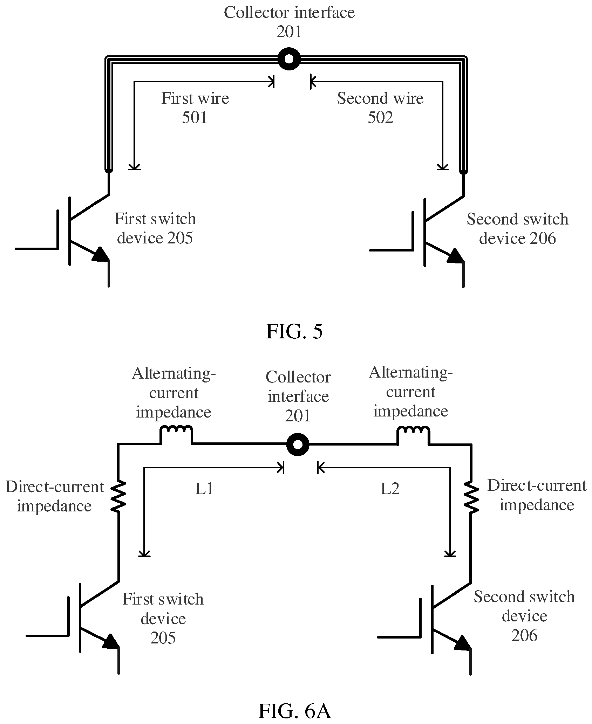

In the foregoing factors, when a plurality of switch devices are connected in parallel, parameters such as a node temperature of each switch device and a magnetic field in which the switch device is located may be basically considered to be the same. However, it is difficult to eliminate impact of a difference between the switch devices due to a manufacturing process or the like on current equalization. Therefore, to further implement current equalization, in a possible implementation, as shown in FIG. 5, the switch device current equalization circuit 200 includes a plurality of wires, including a first wire 501 and a second wire 502. The collector of the first switch device 205 is connected to the collector interface 201 through the first wire 501, and the collector of the second switch device 206 is connected to the collector interface 201 through the second wire 502. A length difference between the first wire 501 and the second wire 502 is less than a first specified threshold.

Equivalent direct-current impedance of the first wire 501 and that of the second wire 502 are at an mΩ level. The second resistor 208 and the fourth resistor 210 are at an Ω level. Therefore, the equivalent direct-current impedance of the first wire 501 is less than the second resistor 208, and the equivalent direct-current impedance of the second wire 502 is less than the fourth resistor 210. Because the lengths of the wires may be flexibly adjusted, current equalization of the first switch device 205 and the second switch device 206 is facilitated. Optionally, the switch device current equalization circuit 200 includes a PCB, and the first wire 501 and the second wire 502 may be PCB traces on the PCB, so that the current equalization of the first switch device 205 and the second switch device 206 is implemented by adjusting lengths of the PCB traces.

In addition, the first wire 501 and the second wire 502 also have equivalent alternating-current impedance, thereby facilitating dynamic current equalization of the first switch device 205 and the second switch device 206. When a current flows in the wires, a path of the current forms a closed loop. According to Faraday's law of electromagnetic induction, a magnetic field is generated when the current in the closed loop changes. The magnetic field interacts with the current, causing the current to form a loop in the wires. Inductance formed by the loop is alternating-current impedance.

Magnitudes of the direct-current impedance and the alternating-current impedance of the wires (the first wire 501 and the second wire 502) are related to factors such as geometric shapes, materials, and lengths of the wires. Generally, equivalent direct-current impedance and equivalent alternating-current impedance of a wire decrease as a cross-sectional area of the wire increases, and increase as the cross-sectional area of the wire decreases. The equivalent direct-current impedance and the equivalent alternating-current impedance of the wire increase as a length of the wire increases, and decrease as the length of the wire decreases.

In this structure, according to this embodiment of this application, an original emitter resistor is decoupled into two resistors, and the two resistors are separately coupled to the Kelvin emitters (the second resistor 208 and the fourth resistor 210) and the collectors (equivalent resistors of the first wire 501 and the second wire 502). This design can prevent the drive signal and the power signal from sharing a same resistor for current equalization. In addition, in the design of this structure, resistance of the two resistors may be independently designed, to avoid the following problem: A resistance value of a single emitter resistor is excessively small, and it is difficult to implement a current equalization function; or a resistance value of a single emitter resistor is excessively large, causing a relatively high loss. In addition, the equivalent direct-current impedance of the first wire 501 and that of the second wire 502 can implement static current equalization for the two switch devices, and the equivalent alternating-current impedance of the first wire 501 and that of the second wire 502 can implement dynamic current equalization for the two switch devices.

In a possible implementation, lengths of the first wire 501 and the second wire 502 need to be greater than 0.5 mm. If the lengths of the first wire 501 and the second wire 502 are excessively small, the equivalent direct-current impedance and the equivalent alternating-current impedance of the first wire 501 and the second wire 502 are also small. In that case, the first wire 501 and the second wire 502 cannot perform static current equalization and dynamic current equalization functions. Therefore, the lengths of the first wire 501 and the second wire 502 need to be greater than 0.5 mm, to achieve relatively good effects of static current equalization and dynamic current equalization.

To further improve the effects of static current equalization and dynamic current equalization when the switch devices are connected in parallel, as shown in FIG. 6A, if the first switch device 205 and the second switch device 206 are connected in parallel, the length of the first wire 501 from the collector of the first switch device 205 to the collector interface 201 is L1, and the length of the second wire 502 from the collector of the second switch device 206 to the collector interface 201 is L2. In this case, the collector interface 201 may be used as a common node of the first switch device 205 and the second switch device 206.

To improve the effects of static current equalization and dynamic current equalization, the length of the first wire 501 and the length of the second wire 502 satisfy the following formula: $\frac{0.8 ∗ \left(L1+L2\right)}{2} < L 1 or L 2 < \frac{1.2 ∗ \left(L1+L2\right)}{2}$ where L1 is the length of the first wire, and L2 is the length of the second wire.

In this way, a length error between the first wire 501 and the second wire 502 may be reduced, so that the lengths of the first wire 501 and the second wire 502 are as close as possible to each other, thereby further improving the effects of static current equalization and dynamic current equalization when the switch devices are connected in parallel.

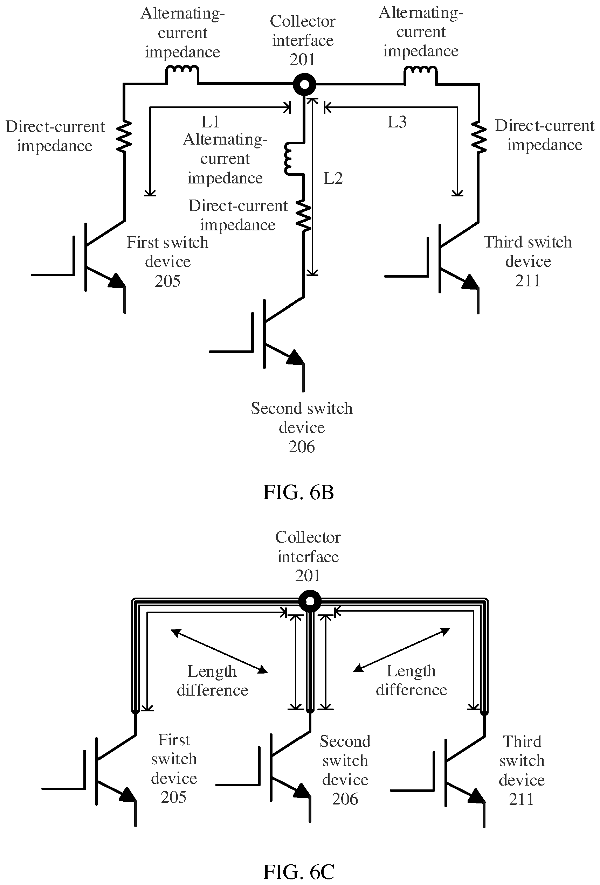

In a possible implementation, in a scenario in which three or more switch devices are connected in parallel, as shown in FIG. 6B where parallel connection of three switch devices is used as an example, if the first switch device 205, the second switch device 206, and the third switch device 211 are connected in parallel, the length of the first wire 501 from the collector of the first switch device 205 to the collector interface 201 is L1, and the length of the second wire 502 from the collector of the second switch device 206 to the collector interface 201 is L2, a length of a third wire from the collector of the third switch device 211 to the collector interface 201 is L3.

To improve the effects of static current equalization and dynamic current equalization, the length of the first wire 501, the length of the second wire 502, and the length of the third wire satisfy the following formula: $\frac{0.8 ∗ \left(L1+L2+L3\right)}{3} < L 1 or L 2 or L 3 < \frac{1.2 ∗ \left(L1+L2+L3\right)}{3}$

In this way, the effects of static current equalization and dynamic current equalization when the switch devices are connected in parallel may be further improved.

For example, as shown in FIG. 6C, when the first switch device 205, the second switch device 206, and the third switch device 211 are connected in parallel, if the length from the collector of each switch device to the collector interface 201 is not adjusted, current equalization effects of the switch devices are worse.

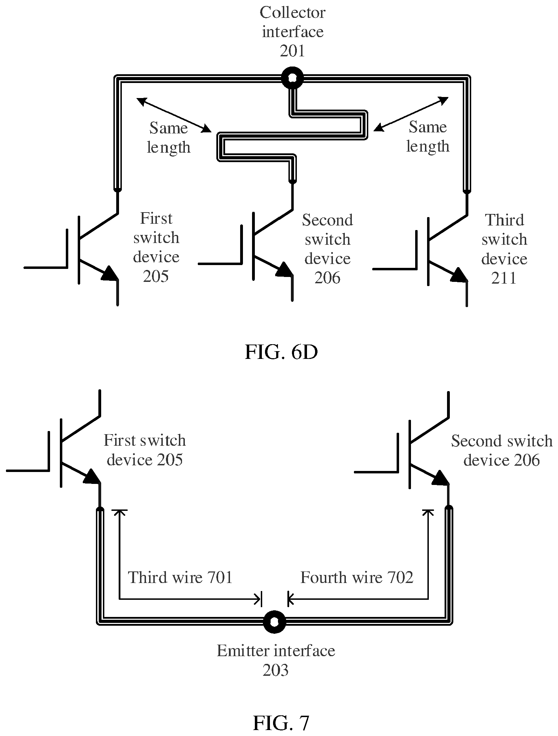

Refer to FIG. 6D. If relative positions of the collector interface 201, the first switch device 205, the second switch device 206, and the third switch device 211 are fixed, length differences between L1, L2, and L3 may be reduced by adjusting a layout of the wires from the collector interface 201 to the switch devices.

In a possible implementation, as shown in FIG. 7, the switch device current equalization circuit 200 includes a plurality of wires, including a third wire 701 and a fourth wire 702. The emitter of the first switch device 205 is connected to the emitter interface 203 through the third wire 701, the emitter of the second switch device 206 is connected to the emitter interface 203 through the fourth wire 702, and a length difference between the third wire 701 and the fourth wire 702 is less than the first specified threshold.

Equivalent direct-current impedance of the third wire 701 and that of the fourth wire 702 are at an mΩ level. The second resistor 208 and the fourth resistor 210 are at an Ω level. The equivalent direct-current impedance of the third wire 701 is less than the second resistor 208. The equivalent direct-current impedance of the fourth wire 702 is less than the fourth resistor 210. Because the lengths of the wires may be flexibly adjusted, current equalization of the first switch device 205 and the second switch device 206 is facilitated. Optionally, the switch device current equalization circuit 200 includes a PCB, and the third wire 701 and the fourth wire 702 may be actually PCB traces on the PCB, so that the current equalization of the first switch device 205 and the second switch device 206 is implemented by adjusting lengths of the PCB traces.

In addition, the third wire 701 and the fourth wire 702 also have equivalent alternating-current impedance, thereby facilitating dynamic current equalization of the first switch device 205 and the second switch device 206. When a current flows in the wires, a path of the current forms a closed loop. According to Faraday's law of electromagnetic induction, a magnetic field is generated when the current in the closed loop changes. The magnetic field interacts with the current, causing the current to form a loop in the wires. Inductance formed by the loop is alternating-current impedance.

Magnitudes of the direct-current impedance and the alternating-current impedance of the wires (the third wire 701 and the fourth wire 702) are related to factors such as geometric shapes, materials, and lengths of the wires. Generally, equivalent direct-current impedance and equivalent alternating-current impedance of a wire decrease as a cross-sectional area of the wire increases, and increase as the cross-sectional area of the wire decreases. The equivalent direct-current impedance and the equivalent alternating-current impedance of the wire increase as a length of the wire increases, and decrease as the length of the wire decreases.

In this structure, according to this embodiment of this application, an original emitter resistor is decoupled into two resistors, and the two resistors are separately coupled to the Kelvin emitters (the second resistor 208 and the fourth resistor 210) and the emitters (equivalent resistors of the third wire 701 and the fourth wire 702). This design can prevent the drive signal and the power signal from sharing a same resistor. In addition, in the design of this structure, resistance of the two resistors may be independently designed, to avoid the following problem: A resistance value of a single emitter resistor is excessively small, and it is difficult to implement a current equalization function; or a resistance value of a single emitter resistor is excessively large, causing a relatively high loss. In addition, the equivalent direct-current impedance of the third wire 701 and that of the fourth wire 702 can implement static current equalization for the two switch devices, and the equivalent alternating-current impedance of the third wire 701 and that of the fourth wire 702 can implement dynamic current equalization for the two switch devices.

In a possible implementation, lengths of the third wire 701 and the fourth wire 702 need to be greater than 0.5 mm. If the lengths of the third wire 701 and the fourth wire 702 are excessively small, the equivalent direct-current impedance and the equivalent alternating-current impedance of the third wire 701 and the fourth wire 702 are also small. In that case, the third wire 701 and the fourth wire 702 cannot perform static current equalization and dynamic current equalization functions. Therefore, the lengths of the third wire 701 and the fourth wire 702 need to be greater than 0.5 mm, to achieve relatively good effects of static current equalization and dynamic current equalization.

To further improve the effects of static current equalization and dynamic current equalization when the switch devices are connected in parallel, if the first switch device 205 and the second switch device 206 are connected in parallel, the length of the third wire 701 from the emitter of the first switch device 205 to the emitter interface 203 is L3, and the length of the fourth wire 702 from the emitter of the second switch device 206 to the emitter interface 203 is L4. In this case, the emitter interface 203 may be used as a common node of the first switch device 205 and the second switch device 206.

To improve the effects of static current equalization and dynamic current equalization, the length of the third wire 701 and the length of the fourth wire 702 satisfy the following formula: $\frac{0.8 ∗ \left(L3+L4\right)}{2} < L 3 or L 4 < \frac{1.2 ∗ \left(L3+L4\right)}{2}$ where L3 is the length of the third wire, and L4 is the length of the fourth wire.

Based on a same concept, this application further provides a power conversion circuit. The circuit includes a plurality of switch devices, a controller, and the switch device current equalization circuit 200 according to the foregoing embodiment. The controller is configured to control a first switch device or a second switch device to be turned on, or control the first switch device or the second switch device to be turned off.

It is clear that a person skilled in the art may make various modifications and variations to this application without departing from the spirit and scope of this application. This application is intended to cover the modifications and variations of this application provided that these modifications and variations fall within the scope of protection defined by the claims of this application and their equivalent technologies.

## Claims

1. A switch device current equalization circuit, wherein the circuit comprises a collector interface, a gate interface, an emitter interface, a Kelvin emitter interface, a first switch device, a second switch device, a first resistor, a second resistor, a third resistor, and a fourth resistor;
both the first switch device and the second switch device comprise a gate, a collector, and an emitter, the collectors of both the first switch device and the second switch device are connected to the collector interface, and the emitters of both the first switch device and the second switch device are connected to the emitter interface; and
a first end of the first resistor is connected to the gate interface, a second end of the first resistor is connected to the gate of the first switch device, a first end of the second resistor is connected to the second end of the first resistor and the emitter interface, a second end of the second resistor is connected to the Kelvin emitter interface, a first end of the third resistor is connected to the gate interface, a second end of the third resistor is connected to the gate of the second switch device, a first end of the fourth resistor is connected to the second end of the third resistor and the emitter interface, and a second end of the fourth resistor is connected to the Kelvin emitter interface.

2. The circuit according to claim 1, wherein the circuit further comprises: a fifth resistor, a sixth resistor, a first capacitor, and a second capacitor, the fifth resistor and the first capacitor are connected in series, and the sixth resistor and the second capacitor are connected in series; and
the first end of the second resistor is connected to the second end of the first resistor through the fifth resistor and the first capacitor that are connected in series, and the first end of the fourth resistor is connected to the second end of the third resistor through the sixth resistor and the second capacitor that are connected in series.

3. The circuit according to claim 1 or 2, wherein the circuit further comprises a plurality of wires, the plurality of wires comprise a first wire and a second wire, the collector of the first switch device is connected to the collector interface through the first wire, the collector of the second switch device is connected to the collector interface through the second wire, and a length difference between the first wire and the second wire is less than a first specified threshold.

4. The circuit according to claim 3, wherein equivalent direct-current impedance of the first wire and that of the second wire are at an mΩ level, and the second resistor is at an Ω level.

5. The circuit according to claim 3, wherein lengths of the first wire and the second wire are greater than 0.5 mm.

6. The circuit according to claim 3, wherein a length of the first wire and a length of the second wire satisfy the following formula: $\frac{0.8 ∗ \left(L1+L2\right)}{2} < L 1 or L 2 < \frac{1.2 ∗ \left(L1+L2\right)}{2}$ wherein L1 is the length of the first wire, and L2 is the length of the second wire.

7. The circuit according to any one of claims 1 to 6, wherein the circuit further comprises a plurality of wires, the plurality of wires comprise a third wire and a fourth wire, the emitter of the first switch device is connected to the emitter interface through the third wire, the collector of the second switch device is connected to the emitter interface through the fourth wire, and a length difference between the third wire and the fourth wire is less than a second specified threshold.

8. The circuit according to claim 7, wherein equivalent direct-current impedance of the third wire and that of the fourth wire are at an mΩ level, and the fourth resistor is at an Ω level.

9. The circuit according to claim 7, wherein lengths of the third wire and the fourth wire are greater than 0.5 mm.

10. The circuit according to claim 7, wherein a length of the third wire and a length of the fourth wire satisfy the following formula: $\frac{0.8 ∗ \left(L3+L4\right)}{2} < L 3 or L 4 < \frac{1.2 ∗ \left(L3+L4\right)}{2}$ wherein L3 is the length of the third wire, and L4 is the length of the fourth wire.

11. The circuit according to any one of claims 1 to 10, wherein the first switch device and the second switch device are insulated gate bipolar transistors IGBTs or metal-oxide semiconductor field-effect transistors MOSs.

12. A power conversion circuit, wherein the circuit comprises a controller and the switch device current equalization circuit according to any one of claims 1 to 11, and the controller is configured to control the first switch device or the second switch device to be turned on, or control the first switch device or the second switch device to be turned off.
